# EUROPÄISCHE PATENTSCHRIFT

(11) **EP 4 115 971 B1**
(45) Veröffentlichungstag und Bekanntmachung des Hinweises auf die Patenterteilung: **25.10.2023**
(21) Anmeldenummer: 21184881.7
(22) Anmeldetag: 09.07.2021
(51) Int. Cl.: B01F 23/235, B01F 23/231, B01F 33/81, B01F 35/221

(54) **KOMPAKTE VORRICHTUNG ZUR ERZEUGUNG VON SCHAUM FÜR WELLNESS- UND/ODER HYGIENEANWENDUNGEN**
COMPACT DEVICE FOR PRODUCING FOAM FOR SPA AND / OR HYGIENE APPLICATIONS
DISPOSITIF COMPACT DESTINÉ À LA GÉNÉRATION DE LA MOUSSE POUR DES APPLICATIONS BIEN-ÊTRE ET/OU HYGIÈNE

(43) Veröffentlichungstag der Anmeldung: 11.01.2023
(73) Patentinhaber: Klafs GmbH, 74523 Schwäbisch Hall (DE)
(72) Erfinder: Gäbele, Markus, 74523 Schwäbisch Hall (DE)
(74) Vertreter: Grünecker Patent- und Rechtsanwälte PartG mbB

(56) Entgegenhaltungen:
- WO-A1-2014/174294
- GB-A- 280 208

## Beschreibung

Die vorliegende Erfindung betrifft eine Vorrichtung zur Erzeugung von Schaum für Wellness- und/oder Hygieneanwendungen nach dem Oberbegriff des unabhängigen Anspruchs 1.

Eine derartige Vorrichtung weist ein Gefäß zur Befüllung mit einer Mischung aus Wasser und einer schaumbildenden Komponente, zum Beispiel Seife, auf, wobei das Gefäß eine Vorrichtung zum Einblasen von Luft in die Mischung aus Wasser und Seife zur Schaumerzeugung aufweist. Eine derartige ist beispielsweise aus JP 2002-078628 A bekannt.

Die Menge an Schaum, welche hierbei im Verhältnis zur Größe der Vorrichtungen erzeugt werden kann, ist relativ klein. Dementsprechend verbraucht die Vorrichtung viel Platz, falls ein großes Volumen an Schaum erzeugt werden soll, um zum Beispiel ein Dampfbad mit Schaum zu füllen. Derartige Vorrichtungen können außerdem keines Falls manuell bewegt werden. Es bedarf also einer Vorrichtung, die auf geringem Platz ein großes Schaumvolumen erzeugt.

Eine weitere Vorrichtung gemäß dem Oberbegriff des Anspruchs 1 zur Erzeugung von Schaum für Wellness- und/oder Hygieneanwendungen ist aus der GB 280,208 A bekannt.

Aufgabe der vorliegenden Erfindung ist es, eine derartige Vorrichtung anzugeben.

Die Aufgabe wird gelöst durch die Merkmale des unabhängigen Anspruchs 1.

Erfindungsgemäß weist die Vorrichtung mindestens zwei in vertikaler Richtung in einer Etagenform übereinander angeordnete Gefäße zur Befüllung mit der Mischung auf, wobei die Gefäße die Vorrichtung zum Einblasen von Luft in die Mischung zur Schaumerzeugung aufweisen und wobei die Gefäße derart zu einem Austrittsbereich hin geöffnet sind, dass der in den Gefäßen erzeugte Schaum in dem Austrittsbereich zusammengeführt wird.

Dadurch bietet die Vorrichtung eine vergrößerte Oberfläche der Mischung aus Wasser und der schaumbildenden Komponente, welche proportional zum produzierbaren Schaumvolumen ist, bei einer geringeren Gesamtgrundfläche der Vorrichtung. Alternativ kann eine gleiche Schaummenge pro Zeiteinheit wie bei herkömmlichen Geräten aber mit geringerem Verbrauch an Wasser und der schaumbildenden Komponente erzeugt werden, was ein sehr verbrauchsarmes Verfahren bestätigt.

Die in den Gefäßen erzeugten Schäume gehen ineinander über. Dadurch kann eine große Menge Schaum zielgerichtet erzeugt werden. Bei der Verbindung der Schäume können sich außerdem teilweise größere Schaumblasen bilden. Die größeren Schaumblasen ermöglichen ein erhöhtes Schaumvolumen bei einem reduzierten Wassergehalt.

Unter "Luft" im Sinne der vorliegenden Erfindung soll sowohl Atemluft als auch ein beliebiges anderes Gasgemisch, das zur Schaumerzeugung Verwendung finden kann, verstanden werden. Vorzugsweise wird jedoch Atemluft bzw. Umgebungsluft verwendet.

Vorteilhafte Ausführungsformen der vorliegenden Erfindung sind Gegenstand der Unteransprüche.

Gemäß einer bevorzugten Ausführungsform weisen die Gefäße dem Austrittsbereich zugewandte Öffnungen auf und eine Höhe zwischen den Böden der Gefäße und Oberseiten der Gefäße nimmt zu den Öffnungen hin zu. Dadurch wird der Schaum, ohne diesen zu zerstören, zu dem Austrittsbereich hingeleitet. In einer besonders bevorzugten Ausführungsform sind die Oberseiten dabei gewölbt ausgebildet. Dadurch wird noch weniger Schaum beim Auftreffen auf die Oberseiten der Gefäße zerstört und es werden außerdem Zonen verhindert, in denen sich Schaum ohne Abzufließen ansammeln kann.

Gemäß einer besonders bevorzugten Ausführungsform sind die Gefäße derart zueinander angeordnet und ausgestaltet, dass Wasser und die schaumbildende Komponente, die sich innerhalb der Vorrichtung aus dem generierten Schaum absetzen, in zumindest eines dieser Gefäße zurück fließen kann, sodass mit diesem Wasser und der schaumbildenden Komponente erneut Schaum erzeugt werden kann. Dadurch kann erreicht werden, dass Wasser und schaumbildende Komponente, welche sich aus dem generierten Schaum innerhalb der Vorrichtung absetzten, zur Schaumerzeugung wiederverwendet werden können. Dies ermöglicht eine sehr effiziente Schaumerzeugung in Bezug auf das eingesetzte Volumen von Wasser und der schaumbildenden Komponente.

Gemäß einer weiteren Ausführungsform ist eine Grundfläche des oberen Gefäßes kleiner als die Grundfläche des unteren Gefäßes. Dadurch kann der gebildete Schaum des unteren Gefäßes auch bei einer weitgehenden Überlappung der Grundflächen der Gefäße das obere Gefäß passieren und dort in den Schaum übergehen, der im oberen Gefäß gebildet wird.

In einer weiteren bevorzugten Ausführungsform entspricht eine gemeinsame Projektionsfläche der Grundflächen der Gefäße auf eine zu den Grundflächen der Gefäße parallelen Ebene der Grundfläche des Gefäßes mit der größten Grundfläche. Durch dies Anordnung kann die Grundfläche der gesamten Vorrichtung geringgehalten werden und trotzdem eine große addierte Fläche der Grundflächen der Gefäße erreicht werden, welche für eine hohe Schaumproduktion relevant ist.

Erfindungsgemäß sind die Vorrichtungen zum Einblasen von Luft derart ausgebildet, dass die Luft großflächig entlang der Böden der Gefäße eingebracht wird. Größflächig entlang der Böden bedeutet in diesem Zusammenhang, dass die Luft im Bereich einer Fläche von mindestens 40% der Fläche des Bodens eines Gefäßes knapp oberhalb des Bodens oder aus dem Boden in das Gefäß beziehungsweise die darin enthaltene Mischung eingebracht wird. Dadurch kann die Fläche, auf der Schaum pro Gefäß erzeugt wird, maximiert werden, was wiederrum die erzeugbare Schaummenge maximiert. Vorzugsweise wird Luft über mindestens 60%, besonders bevorzugt über mindestens 90%, der Fläche des Bodens eines Gefäßes eingebracht.

In einer bevorzugten Ausführungsform weisen die Vorrichtungen zum Einblasen von Luft Sprudelplatten, Membranen oder Folien auf. Durch die Sprudelplatten, Membranen oder Folien werden mit der Vorrichtung zum Einblasen von Luft Luftblasen in die Mischung in den Gefäßen eingebracht. Die Sprudelplatten, Membranen oder Folien sind dabei in der Mischung in den Gefäßen angeordnet oder bilden teilweise die Böden der Gefäße. Durch die Verwendung von Sprudelplatten kann auf kostengünstige und effiziente Weise Luft in die einzelnen Gefäße eingeblasen werden. Durch eine geeignete Auswahl bezüglich der Lochgröße, Lochgeometrie und Anordnung der Löcher kann die Blasengröße und generelle Konsistenz des Schaums beeinflusst werden. Das gleiche gilt für Membranen und Folien. Bevorzugter Weise sind die Sprudelplatten, Membranen oder Folien derart ausgestaltet, dass kein Wasser durch die Sprudelplatten, Membranen oder Folien zurückfließen kann, wenn keine Luft eingeblassen wird. Dadurch kann Wasser eingespart werden und der Luftzufuhrtrakt wird vor Wassereinfluss geschützt.

In einer weiteren Ausführungsform sind die Sprudelplatten, Membranen oder Folien der Vorrichtung zum Einblasen von Luft austauschbar. Durch einen solchen Austausch können die Schaumeigenschaften angepasst werden, in dem zum Beispiel eine Sprudelplatte mit einer anderen Lochgröße eingesetzt wird. Vorzugsweise sind Eigenschaften der Sprudelplatten, Membranen oder Folien auch ohne ein Austauschen der gesamten Komponente anpassbar. Weiter vorzugsweise sind die Eigenschaften der Sprudelplatten, Membranen oder Folien während dem Betrieb der Vorrichtung anpassbar. So kann der Nutzer Schaumeigenschaften während dem Betrieb einstellen.

In einer bevorzugten Ausführungsform umfassen die Vorrichtungen zum Einblasen von Luft eine regelbare Lüftungseinheit, die die eingebrachte Luftmenge in die Gefäße regelt. Dadurch kann eine optimale Luftzuführung zur Regelung der Schaummenge und Schaumqualität erreicht werden. Ebenfalls können durch die eingebrachte Luftmenge die Schaumeigenschaften, wie zum Beispiel die Blasengröße, beeinflusst werden. Vorzugsweise ist dabei an jedes Gefäß eine separate Lüftungseinheit angeschlossen. Damit kann die Luftzufuhrt pro Gefäß spezifisch eingestellt werden, was nochmals eine genauere Regelung der Schaummenge und Schaumqualität ermöglicht. Vorzugsweise erfolgt die Luftzufuhr über einen oder mehrere Ventilatoren.

In einer besonders bevorzugten Ausführungsform weist die Vorrichtung ein System zur Einstellung der Wasserpegel in den Gefäßen auf. In dem der Wasserpegel in den Gefäßen auf einem bestimmten Niveau gehalten werden kann, wird die Effizienz der Schaumerzeugung gesteigert. So kann unteranderem gewährleistet werden, dass kein Gefäß kurzfristig keine Mischung aus Wasser und der schaumbildenden Komponente mehr enthält. Dadurch würde Luft aus der Vorrichtung zum Einblasen von Luft direkt in den schon erzeugten Schaum geblasen, was zu einer Zerstörung des Schaums führen würde. Außerdem gibt es für die Schaumerzeugung je nach Lufteinbringung einen präferierten Bereich des Wasserpegels, in dem die Schaumerzeugung maximiert werden kann. Durch das System zur Einstellung der Wasserpegel in den Gefäßen kann der Wasserpegel innerhalb dieses präferierten Bereichs gehalten werden. Es gibt verschiedene Möglichkeiten wie ein solches System zur Einstellung der Wasserpegel ausgestaltet sein könnte. In einer bevorzugten Ausführungsform des Systems zur Einstellung der Wasserpegel weisen die einzelnen Gefäße Wasserzugänge mit Ventilen auf, wobei die Wasserzugabe mittels der Ventile über einen Schwimmschalter oder einen Sensor zur Messung des Wasserpegels gesteuert wird. Indem die Wasserzugabe und damit der Wasserpegel für jedes einzelne Gefäß geregelt werden, kann damit besonders gut auf unterschiedliche Schaumproduktionen und damit Wasserverlustmengen der einzelnen Gefäße reagiert werden. Eine andere, ebenfalls bevorzugte Ausführungsform des Systems zur Einstellung der Wasserpegel kommt hingegen mit nur einem Wasseranschluss in das obere Gefäß aus. Dabei weisen alle Gefäße außer, dass untere Gefäß einen Überlauf auf der Höhe des präferierten Wasserpegels auf, wobei der Überlauf derart gestaltet ist, dass das Wasser in das jeweilige darunterliegende Gefäß geführt wird. Das untere Gefäß weist hingegen einen Schwimmschalter oder einen anderen Sensor zur Messung des Wasserpegels auf. Wenn im unteren Gefäß zu wenig Wasser vorhanden ist, wird dem oberen Gefäß solange Wasser zugegeben, wodurch sich auch die dazwischenliegenden Gefäße bis zu ihrem Überlauf füllen, bis ausreichend Wasser im unteren Gefäß vorhanden ist. Weiter vorzugsweise, weisen auch die Gefäße oberhalb des unteren Gefäßes einen Schwimmschalter oder einen anderen Sensor zur Messung des Wasserpegels auf. Das jeweilig Gefäß, welches einen Wassertiefstand aufweist, kann dann durch das gleiche Verfahren befüllt werden. Vorzugsweise kann das Gerät durch die Wasserstandsregelung gleichzeitig die Luftzufuhr der jeweils geregelten Sprudeleinheit stoppen sofern der Wasserstand zu niedrig ist, dadurch steigt die Effizienz in den übrigen Schaumerzeugungsetagen und es wird kein Schaum durch die Luftströme zerstört.

Vorzugsweise ist das System zur Einstellung der Wasserpegel in den Gefäßen mit einem externen Wasseranschluss und/oder einem Wassertank verbunden. Die Verwendung eines Wasseranschlusses hat dabei andere Vorteile als die Verwendung eines Wassertanks. Wenn ein externer Wasseranschluss mit dem System zur Einstellung der Wasserpegel verbunden ist, ist das von der Vorrichtung erzeugte Schaumvolumen nicht durch die zu Verfügung stehende Wassermenge begrenzt. Es können somit große Mengen an Schaum erzeugt werden. Wenn ein Wassertank mit dem System zur Einstellung der Wasserpegel verbunden ist, ist zwar das Schaumvolumen durch das Volumen des Wassertanks begrenzt. Dafür ist eine Verwendung der Vorrichtung unabhängig von äußeren Gegebenheiten möglich und es bedarf keinem Wasseranschluss. Dadurch wird eine mobile Vorrichtung ermöglicht. Vorzugsweise weist die Vorrichtung sowohl einen Wassertank als auch die Möglichkeit auf, einen Wasseranschluss anzuschließen. So kann zum Beispiel der Wassertank eine Anschlussmöglichkeit für einen Wasseranschluss aufweisen. Dies erhöht die Anwendungsmöglichkeiten der Vorrichtung zusätzlich.

In einer weiteren bevorzugten Ausführungsform weißt das System zur Einstellung der Wasserpegel eine Einheit zur Temperaturregelung des Wassers auf. Damit kann die Schaumtemperatur geregelt werden und an die Bedürfnisse des Nutzers angepasst werden. Vorzugsweise kann die Einheit zur Temperaturregelung des Wassers als Durchlaufwärmetauscher ausgeführt sein, falls nur ein Wasseranschluss angeschlossen ist und die Vorrichtung keinen Wassertank aufweist. In einer anderen bevorzugten Ausführungsform ist die Einheit zur Temperaturregelung des Wassers in dem Wassertank integriert. Besonders bevorzugt, weist die Einheit zur Temperaturregelung des Wassers in dem Wassertank eine Kühleinheit, wie zum Beispiel einen Kühlakku, auf. Damit kann auch kalter Schaum erzeugt werden, der ein ganz besonderes Badeerlebnis ermöglicht.

In einer besonders bevorzugten Ausführungsform weist die Vorrichtung eine schaumbildende Komponentenzugabe auf, die mit dem System zur Einstellung der Wasserpegel verbunden ist. Das Verhältnis zwischen Wasser und der schaumbildenden Komponente in der Mischung in den Gefäßen ist für eine effiziente Schaumerzeugung sehr relevant und sollte sich innerhalb eines bestimmten Bereichs befinden. Durch die Verbindung der schaumbildenden Komponentenzugabe und des Systems zur Einstellung der Wasserpegel kann das Verhältnis zwischen Wasser und der schaumbildenden Komponente in der Mischung, die in die Gefäße eingebracht wird, schon vor der Einbringung in die Gefäße eingestellt werden. Hierfür kann die Vorrichtung zum Beispiel eine Mischbatterie aufweisen. Dies macht es einfacher, das gewünschte Verhältnis zu erreichen. Falls ein Wassertank mit dem System zur Einstellung der Wasserpegel in den Gefäßen verbunden ist, könnte die schaumbildende Komponentenzugabe auch direkt mit diesem Tank verbunden werden. In bestimmten Fällen macht es Sinn das Verhältnis zwischen Wasser und der schaumbildenden Komponente in der Mischung in den Gefäßen unterschiedlich zu gestalten, sodass der erzeugte Schaum aus den verschiedenen Gefäßen unterschiedliche Eigenschaften aufweist. Hierfür sind einzelne schaumbildende Komponentenzugaben vorteilhaft, die die schaumbildende Komponente direkt in das jeweilige Gefäß zu geben.

In einer weiteren bevorzugten Ausführungsform weist die Vorrichtung eine Desinfektionsmittelzugabe auf, die mit dem System zur Einstellung der Wasserpegel verbunden ist. Durch die Zugabe von Desinfektionsmitteln können eventuelle Hygienevorschriften eingehalten werden und der Schaum für eine breitere Anwendungspalette genutzt werden. Auch hier ist es sinnvoll die Desinfektionsmittelzugabe mit dem System zur Einstellung der Wasserpegel zu verbinden, da dadurch das Desinfektionsmittel effizient bei einem bestimmten Verhältnis zu Wasser innerhalb der Mischung aus Wasser und Seife in die Gefäße eingebracht werden kann.

In einer besonders bevorzugten Ausführungsform sind die Gefäße mit einem Gehäuse umschlossen, das eine Schaumaustrittsöffnung aus dem Austrittsbereich aufweist. Durch das Gehäuse und dessen Schaumaustrittsöffnung kann der erzeugte Schaum zielgerichtet aus der Vorrichtung geleitet werden. Das Gehäuse kann dabei vorteilhafter Weise auch als Mittel zur Zurückführung von Wasser und der schaumbildenden Komponente, die sich innerhalb der Vorrichtung aus dem generierten Schaum absetzen, in eines der Gefäße genutzt werden. Vorzugsweise ist ein Schlauch an die Schaumaustrittsöffnung angeschlossen. Dadurch kann der Schaum sehr zielgerichtet verwendet werden. Weiter vorzugsweise ist an den Schlauch ein Schaumaustrittskopf mit regulierbaren Schaumaustritt angeschlossen. Dieser ermöglicht nochmals eine einfache Regelung der Schaumeinbringung und der Art des Schaumes durch den Nutzer.

In einer weiteren besonders bevorzugten Ausführungsform weist die Vorrichtung eine Batterie zum Betrieb der Vorrichtung auf. Durch den Betrieb mit einer Batterie wird ermöglicht, dass die Vorrichtung unabhängig von einem Netzanschluss betrieben werden kann. Dementsprechend kann die Vorrichtung auch bewegt werden und an verschiedenen Orten verwendet werden.

In einer weiteren Ausführungsform weist die Vorrichtung ein Hygieneprogramm und/oder Reinigungsprogramm auf. In diesen Programmen können Luft, Wasser, Desinfektionsmittel und/oder andere Reinigungskomponenten durch einzelne oder mehrere Bereiche und Komponenten der Vorrichtung gepumpt werden und/oder diese neu befüllt werden, um die Vorrichtung zu entleeren, reinigen oder zu desinfizieren.

Ausführungsbeispiele der Erfindung werden im Folgenden anhand von Zeichnungen näher erläutert.

Es zeigen:
- Figur 1: eine schematische Schnittansicht eines ersten Ausführungsbeispiels der erfindungsgemäßen Vorrichtung,
- Figur 2: eine schematische Schnittansicht eines zweiten Ausführungsbeispiels der erfindungsgemäßen Vorrichtung
- Figur 3: eine schematische Darstellung eines dritten Ausführungsbeispiels der erfindungsgemäßen Vorrichtung, und
- Figur 4: eine Draufsicht von Oben auf die Grundflächen der Gefäße des dritten Ausführungsbeispiels, und
- Figur 5: eine schematische Schnittansicht eines vierten Ausführungsbeispiels.

Für die folgenden Ausführungen gilt, dass gleiche Teile durch gleiche Bezugszeichen bezeichnet werden. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

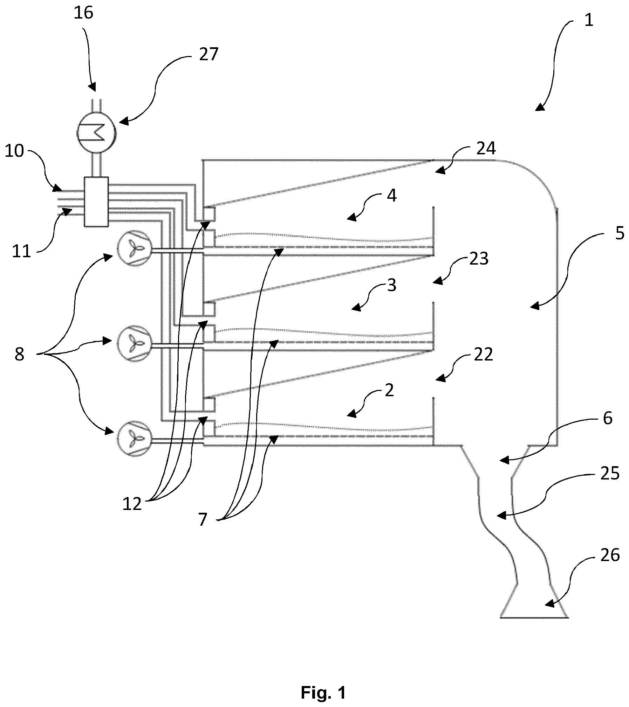

Figur 1 zeigt ein erstes Ausführungsbeispiel der erfindungsgemäßen Vorrichtung 1. Die Vorrichtung 1 des ersten Ausführungsbeispiels weist dabei drei übereinander angeordnete Gefäße 2, 3, 4 auf. Dabei weisen die Gefäße 2, 3, 4 die gleichen Grundflächen auf und sind etagenförmig übereinander angeordnet. Die Gefäße weisen jeweils seitliche Öffnungen 22, 23, 24 auf, die die Gefäße 2, 3, 4 zu einem Austrittsbereich 5 hin öffnen. Dabei sind die Oberseiten bzw. Decken der Gefäße 2, 3, 4 zu den Öffnungen 22, 23, 24 hin schräg ausgebildet, sodass eine Höhe der Gefäße 2, 3, 4 zu den Öffnungen 22, 23, 24 hin zunimmt. Am Boden der Gefäße 2, 3, 4 sind jeweils Membranen 7 angeordnet, durch die mittels Luftzuvor 8 Luftblasen in die einzelnen Gefäße 2, 3, 4 eingebracht werden kann. Dabei ist jedem Gefäß 2, 3, 4 eine einzelne Lüftungseinheit zugewiesen.

Daneben weisen die Gefäße 2, 3, 4 Zugänge 12 auf, durch die ein Gemisch aus Wasser, einer schaumbildenden Komponente und Desinfektionsmittel in die Gefäße 2, 3, 4 eingebracht werden kann. Die Zugänge 12 sind dabei an eine Mischbatterie angeschlossen, an welche wiederum ein Wasseranschluss 16, eine schaumbildende Komponentenzuleitung 10 und eine Desinfektionsmittelzuleitung 11 angeschlossen sind. Der Wasseranschluss 16 ist vor der Mischbatterie an einen Durchlaufwärmetauscher 27 angeschlossen, durch den die Wassertemperatur und damit schlussendlich die Schaumtemperatur gemäß den Wünschen des Nutzers eingestellt werden kann.

Der Austrittsbereich 5 weist eine Schaumaustrittsöffnung 6 auf, an die ein Schlauch 25 angeschlossen ist. An diesen Schlauch 25 ist wiederum ein Schaumaustrittskopf 26 angeschlossen.

Nachfolgend wird die Schaumproduktion mittels der Vorrichtung 1 nach dem ersten Ausführungsbeispiel erläutert.

Hierfür wird den drei Gefäßen 2, 3, 4 über die Zuleitungen 12 das Gemisch aus Wasser, der schaumbildenden Komponente und Desinfektionsmittel zugeführt, wobei in der Mischbatterie ein vorgegebenes Verhältnis eingestellt werden kann. Die Zufuhr zu den Gefäßen wird dabei über Ventile an den Enden der Zuleitungen 12 geregelt.

Der Wasserpegel des Gemischs aus Wasser, der schaumbildenden Komponente und Desinfektionsmittel wird dabei über die Sensoren für jedes Gefäß 2, 3, 4 separat geregelt. In die Gefäße 2, 3, 4wird über die jeweilige Membran 7 mittels der Luftzufuhr 8 Luft in das Gemisch eingeblasen, wobei die Luftzufuhr 8 über separate Lüftungseinheiten realisiert ist. Dadurch wird Schaum erzeugt. Der erzeugte Schaum des jeweiligen Gefäßes 2, 3, 4 steigt nach oben und wird von den Oberseiten der Gehäuse 2, 3, 4 durch die jeweiligen Öffnungen 22, 23, 24 in den Austrittsbereich 5 geleitet. In dem Austrittsbereich 5 wird der in den Gefäßen 2, 3, 4 erzeugte Schaum dementsprechend zusammengeführt und dann zusammen durch die Schaumaustrittsöffnung 6 in den Schlauch 25 geleitet. Durch den Schlauch 24 gelangt der Schaum dann zum Schaumaustrittskopf 26 und damit schlussendlich zum Nutzer.

Dabei kann durch das Zusammenspiel der Sensoren mit den Ventilen in den Zugängen 12 der Wasserpegel des Gemischs in den jeweiligen Gefäßen 2, 3, 4 innerhalb eines präferierten Bereichs gehalten werden, in dem die Schaumproduktion besonders effizient erfolgen kann. Zusätzlich kann ebenfalls die Schaumenge und Schaumqualität durch eine geregelte Luftzufuhr 8 mittels der Lüftungseinheiten eingestellt werden, wobei dies durch die separaten Lüftungseinheiten vorteilhafterweise pro Gefäß möglich ist.

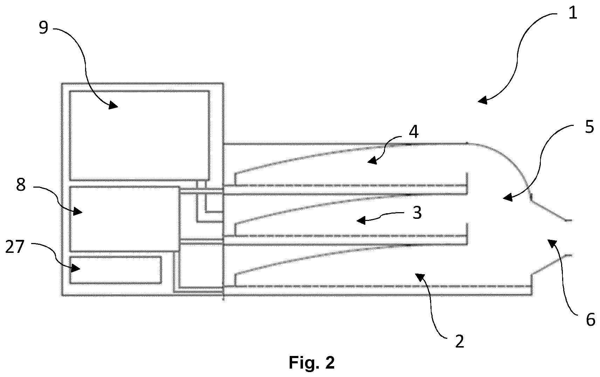

Figur 2 zeigt ein zweites Ausführungsbeispiel der erfindungsgemäßen Vorrichtung 1, wobei die Vorrichtung hierbei insbesondere für den mobilen Gebrauch geeignet ist. So weist die Vorrichtung 1 des zweiten Ausführungsbeispiels einen Wassertank 9 auf, in den auch das Gemisch aus Wasser, der schaumbildenden Komponente und Desinfektionsmittel eingeführt werden kann, um daraus die Gefäße 2, 3, 4 mit dem Gemisch zu versorgen. Die schaumbildende Komponente und das Desinfektionsmittel können aber auch nach dem Wassertank 9 oder direkt in die Gefäße 2, 3, 4, beigemischt werden. Hierbei kann der Wassertank 9 eine mobile Temperaturregelungseinheit aufweisen, durch die die Schaumtemperatur eingestellt werden kann. Daneben weist die Vorrichtung 1 des zweiten Ausführungsbeispiels eine gebündelte Luftzufuhr 8 auf und wird insgesamt mittels einer Batterie 27 angetrieben.

Im Gegensatz zum ersten Ausführungsbeispiel weist das unterste Gefäß 2 des zweiten Ausführungsbeispiels eine größere Grundfläche auf, wobei diese Grundfläche teilweise unterhalb des Austrittsbereichs 5 angeordnet ist. Damit fließt Wasser und schaumbildende Komponente, die sich im Austrittsbereich 5 aus dem Schaum absetzen, wieder in das unterste Gefäß 2 und kann wiederverwendet werden. Dies macht das zweite Ausführungsbeispiel besonders effizient bezüglich des Wasserverbrauchs. Ein weiterer Unterschied zum ersten Ausführungsbeispiel ist, dass die Oberseiten der Gefäße 2, 3, 4 gewölbt sind. Damit wird der Schaum besonders sanft in Richtung des Austrittsbereichs 5 gelenkt.

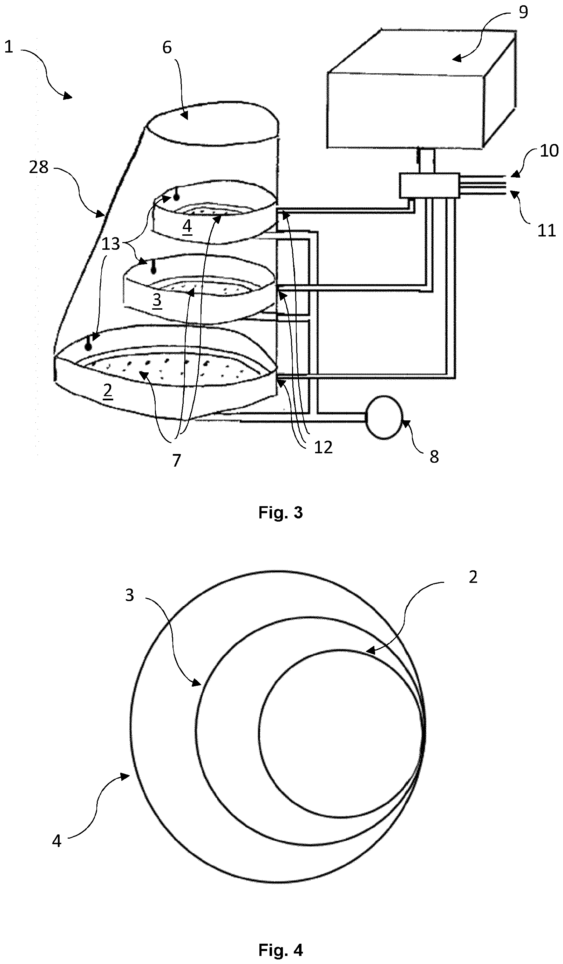

Figur 3 und Figur 4 zeigen ein drittes Ausführungsbeispiel der erfindungsgemäßen Vorrichtung 1. Die Vorrichtung 1 des dritten Ausführungsbeispiels weist drei übereinander angeordnete runde Gefäße 2, 3, 4 auf. Dabei hat das untere Gefäß 2 die größte Grundfläche und das obere Gefäß 4 die kleinste Grundfläche. Die Grundfläche des mittleren Gefäßes 3 liegt in seiner Größe zwischen der Grundfläche des unteren Gefäßes 2 und des oberen Gefäßes 4. Die drei Gefäße 2, 3, 4 sind derart in Kaskadenform übereinander ausgerichtet, dass sich die Grundflächen in einer horizontalen Richtung gänzlich überdecken.

Im dritten Ausführungsbeispiel werden die drei Gefäße 2, 3, 4 von einem Kegelstumpf-förmigen Gehäuse 28 umschlossen. Die Grundfläche des Kegelstumpf-förmigen Gehäuses 28 ist dabei die obere Kante des unteren Gefäßes 2. Auf einer Seite des Gehäuses 28 ragt das Gehäuse vertikal nach oben. Das mittlere Gefäß 3 und das obere Gefäß 4 liegen an dieser vertikalen Seite des Gehäuses 28 an. In Figur 4 ist zu sehen wie die Ränder der drei Grundflächen der drei Gefäße 2, 3, 4 von oben betrachtet einen gemeinsamen Punkt aufweisen. Das Gehäuse 28 ist an der Schnittfläche der Kegelstumpf-förmigen Form geöffnet und weist so die Schaumaustrittsöffnung 6 auf.

Die drei Gefäße weisen jeweils an ihrem Boden runde Sprudelplatten 7 auf. Die Sprudelplatten 7 sind über eine gemeinsame Zuleitung mit einer Luftzufuhr 8 verbunden. Das dritte Ausführungsbeispiel weist außerdem ein Wassertank 9 auf. Der Wassertank ist über eine Mischbatterie und entsprechende Zuleitungen 12 mit den drei Gefäßen 2, 3, 4 verbunden. In der Mischbatterie kann dem Wasser durch eine schaumbildende Komponentenzuleitung 10 und einer Desinfektionsmittelzufuhrleitung 11 schaumbildende Komponente und Desinfektionsmittel beigemischt werden. Am Ende dieser Zuleitungen 12 sind jeweils regelbare Ventile angebracht, die eine Zuleitung des Gemischs aus Wasser, Seife und Desinfektionsmittel in die Gefäße 2, 3, 4 Regeln können.

Die Gefäße 2, 3, 4 weisen außerdem jeweils einen Sensor 13 auf, der ein Oberflächenlevel des Wassers in dem jeweiligen Gefäß messen kann. Dem Fachmann sind hierfür verschiedene mögliche Sensoren bekannt.

Nachfolgend wird der Unterschied der Schaumproduktion mittels der Vorrichtung 1 nach dem dritten Ausführungsbeispiel 1 erläutert.

Bei dem dritten Ausführungsbeispiel steigt der Schaum des jeweiligen Gefäßes 2, 3, 4 zur der oben angeordneten Schaumaustrittsöffnung 6, wobei der Schaum, welcher im unteren Gefäß 2 gebildet wird, in den Schaum aus dem mittleren Gefäß 3 übergeht und diesen nach oben schiebt. Der Schaum aus dem unteren und mittleren Gefäß 2 ,3 geht dann in den Schaum des oberen Gefäßes 4 über und schiebt diesen ebenfalls weiter nach oben. Dadurch wird der Schaum durch die Schaumaustrittsöffnung 6 nach oben aus dem Gehäuse 28 befördert.

Durch die Anordnung der Gefäße 2,3, 4 und des Gehäuses 28 wird Wasser, das sich innerhalb des Gehäuses 28 aus dem Schaum absondert, wieder in eines der Gefäße 2, 3, 4 zurückgeführt und kann dort erneut zur Schaumproduktion genutzt werden.

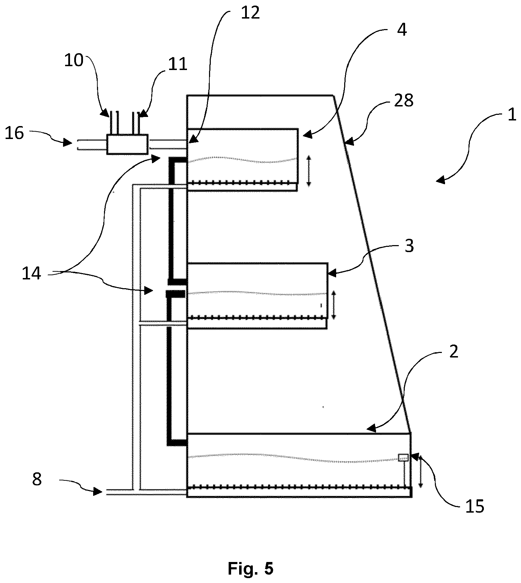

In Figur 5 wird ein viertes Ausführungsbeispiel gezeigt, welches in einem horizontalen Schnitt gezeigt wird. Das vierte Ausführungsbeispiel weist dabei die gleichen drei Gefäße 2, 3, 4 und das gleiche Gehäuse 100 wie das dritte Ausführungsbeispiel auf. Ebenfalls befindet sich am Boden der drei Gefäße jeweils eine Sprudelplatte 7, die über gemeinsame Zuleitungen mit einer Luftzufuhr 8 verbunden sind.

Im Gegensatz zum dritten Ausführungsbeispiel ist die Vorrichtung 1 des vierten Ausführungsbeispiels an einen Wasseranschluss 16 angeschlossen. Der Wasseranschluss 16 ist dabei nur mit dem oberen Gefäß 4 über ein Ventil verbunden. Vor dem Ventil wird dem Wasser in einer Mischbatterie mittels einer schaumbildende Komponentenzuleitung 10 10 und einer Desinfektionsmittelzufuhrleitung 11 schaumbildende Komponente und Desinfektionsmittel beigemischt.

Das obere Gefäß 4 weist dabei einen Überlauf 14 auf, durch den Wasser, sobald es den präferierten Wasserpegel im oberen Gefäß 4 überschreitet, in das mittlere Gefäß 3 überführt wird. Das mittlere Gefäß 3 weist ebenfalls einen derartigen Überlauf 14 auf, wobei das übermäßige Wasser entsprechend in das untere Gefäß 2 überführt wird. Im unteren Gefäß befindet sich ein Schwimmschalter 15, der die Wasserzufuhr über den Wasseranschluss 16 stoppt, sobald der Wasserpegel im unteren Gefäß 2 im präferierten Bereich liegt. Somit kann der Wasserpegel über ein einzelnes geregeltes Ventil 12 in den drei Gefäßen im präferierten Bereich gehalten werden. In einem nicht gezeigten Ausführungsbeispiel können auch das obere Gefäß 4 und das mittlere Gefäß 3 derartige Schwimmschalter 15 aufweisen, sodass auch der Wasserpegel im oberen Gefäß 4 und im mittleren Gefäß 3 immer in einem präferierten Bereich gehalten werden kann, selbst wenn die Schaumerzeugung und damit der Wasserverbrauch im unteren Gefäß 2 durch einen Defekt nicht stattfindet.

Es ist anzumerken, dass die Form der Grundflächen, die Anzahl und die Anordnung der Gefäße zueinander gemäß den Merkmalen des Anspruchs 1 eine in den Figuren nicht gezeigte Vielfalt ermöglichen. Ein Ausführungsbeispiel ohne ein Gehäuse um die Gefäße ist ebenso denkbar.

### Bezugszeichen

- 1: Vorrichtung
- 2: unteres Gefäß
- 3: mittleres Gefäß
- 4: oberes Gefäß
- 5: Austrittsbereich
- 6: Schaumaustrittsöffnung
- 7: Sprudelplatte/Membran
- 8: Luftzufuhr
- 9: Wassertank
- 10: schaumbildende Komponentenzuleitung
- 11: Desinfektionsmittelzufuhrleitung
- 12: Zuleitung
- 13: Sensor
- 14: Überlauf
- 15: Schwimmschalter
- 16: Wasseranschluss
- 22: Öffnung des unteren Gefäßes
- 23: Öffnung des mittleren Gefäßes
- 24: Öffnung des oberen Gefäßes
- 25: Schlauch
- 26: Schaumaustrittskopf
- 27: Batterie
- 28: Gehäuse

## Patentansprüche

1. Vorrichtung (1) zur Erzeugung von Schaum für Wellness- und/oder Hygieneanwendungen mit einem Gefäß (2, 3, 4) zur Befüllung mit einer Mischung aus Wasser und einer schaumbildenden Komponente, wobei das Gefäß (2, 3, 4) eine Vorrichtung zum Einblasen von Luft in die Mischung zur Schaumerzeugung aufweist, wobei die Vorrichtung (1) mindestens zwei in vertikaler Richtung in einer Etagenform übereinander angeordnete Gefäße (2, 3, 4) zur Befüllung mit der Mischung aufweist, wobei die Gefäße (2, 3, 4) die Vorrichtung zum Einblasen von Luft in die Mischung zur Schaumerzeugung aufweisen, wobei die Gefäße (2, 3, 4) derart zu einem Austrittsbereich (5) hin geöffnet sind, dass der in den Gefäßen (2, 3, 4) erzeugte Schaum in dem Austrittsbereich (5) zusammengeführt wird, **dadurch gekennzeichnet, dass** die Vorrichtungen zum Einblasen von Luft derart ausgebildet sind, dass die Luft großflächig entlang der Böden der Gefäße (2, 3, 4) eingebracht wird, indem die Luft im Bereich einer Fläche von mindestens 40% der Fläche des Bodens eines Gefäßes (2, 3, 4) knapp oberhalb des Bodens oder aus dem Boden in das Gefäß (2, 3, 4) beziehungsweise die darin enthaltene Mischung eingebracht wird.

2. Vorrichtung (1) nach Anspruch 1, **dadurch gekennzeichnet, dass** die Gefäße (2, 3, 4) dem Austrittsbereich (5) zugewandte Öffnungen (22, 23, 24) aufweisen und eine Höhe zwischen den Böden der Gefäße (2, 3, 4) und Oberseiten der Gefäße (2, 3, 4) zu den Öffnungen (22, 23, 24) hin zu nimmt, wobei die Oberseiten vorzugsweise gewölbt ausgebildet sind.

3. Vorrichtung (1) nach Anspruch 1 oder 2, **dadurch gekennzeichnet, dass** die Gefäße (2, 3, 4) derart zueinander angeordnet und ausgestaltet sind, dass Wasser und schaumbildende Komponente, die sich innerhalb der Vorrichtung (1) aus dem generierten Schaum absetzen, in zumindest eines dieser Gefäße (2, 3, 4) zurückfließen kann, sodass mit diesem Wasser erneut Schaum erzeugt werden kann.

4. Vorrichtung (1) nach einem der Ansprüche 1 bis 3, **dadurch gekennzeichnet, dass** die Vorrichtungen zum Einblasen von Luft Sprudelplatten (7), Membranen (7) oder Folien aufweisen.

5. Vorrichtung (1) nach Anspruch 4, **dadurch gekennzeichnet, dass** das die Sprudelplatten (7), Membranen (7) oder Folien derart ausgestaltet sind, dass kein oder möglichst wenig Wasser und schaumbildende Komponente durch die Sprudelplatten (7), Membranen (7) oder Folien zurückfließen können, wenn keine Luft eingeblassen wird.

6. Vorrichtung (1) nach einem der Ansprüche 1 bis 5, **dadurch gekennzeichnet, dass** die Vorrichtungen zum Einblasen von Luft eine regelbare Lüftungseinheit umfassen, die die eingebrachte Luftmenge in die Gefäße (2, 3, 4) regelt, wobei vorzugsweise an jedes Gefäß (2, 3, 4) eine separate Lüftungseinheit angeschlossen ist.

7. Vorrichtung (1) nach einem der Ansprüche 1 bis 6, **dadurch gekennzeichnet, dass** die Vorrichtung (1) ein System zur Einstellung der Wasserpegel in den Gefäßen (2, 3, 4) aufweist.

8. Vorrichtung (1) nach Anspruch 7, **dadurch gekennzeichnet, dass** das System zur Einstellung der Wasserpegel in den Gefäßen (2, 3, 4) mit einem externen Wasseranschluss (16) und/oder einem Wassertank (9) verbunden ist.

9. Vorrichtung (1) nach Anspruch 8, **dadurch gekennzeichnet, dass** der Wassertank (9) eine Einheit zur Temperaturregelung und/oder einen Kühlakku aufweist.

10. Vorrichtung (1) nach einem der Ansprüche 7 bis 9, **dadurch gekennzeichnet, dass** die Vorrichtung (1) eine schaumbildende Komponentenzugabe (10) aufweist, die mit dem System zur Einstellung der Wasserpegel verbunden ist.

11. Vorrichtung (1) nach einem der Ansprüche 7 bis 10, **dadurch gekennzeichnet, dass** die Vorrichtung (1) eine Desinfektionsmittelzugabe (11) aufweist, die mit dem System zur Einstellung der Wasserpegel verbunden ist.

12. Vorrichtung (1) nach einem der Ansprüche 1 bis 11, **dadurch gekennzeichnet, dass** die Gefäße (2, 3, 4) mit einem Gehäuse (28) umschlossen sind, das eine Schaumaustrittsöffnung (6) aus dem Austrittsbereich (5) aufweist.

13. Vorrichtung (1) nach Anspruch 12, **dadurch gekennzeichnet, dass** ein Schlauch (25) an die Schaumaustrittsöffnung (6) angeschlossen ist, wobei vorzugsweise an den Schlauch (25) ein Brausekopf (26) mit regulierbaren Schaumaustritt angeschlossen ist.

14. Vorrichtung (1) nach einem der Ansprüche 1 bis 13, **dadurch gekennzeichnet, dass** die Vorrichtung (1) eine Batterie (27) zum Betrieb der Vorrichtung (1) aufweist.

## Claims

1. Device (1) for producing foam for wellness and/or hygiene applications with a vessel (2, 3, 4) to be filled with a mixture of water and a component producing foam, where said vessel (2, 3, 4) comprises a device for blowing air into said mixture to produce foam, wherein said device (1) comprises at least two vessels (2, 3, 4) to be filled with said mixture arranged one above the other in a vertical direction in tiers, where said vessels (2, 3, 4) comprise said device for blowing air into said mixture to produce foam, where said vessels (2, 3, 4) are open towards an outlet region (5) such that the foam produced in said vessels (2, 3, 4) is merged in said outlet region (5), **characterized in that** said devices for blowing air in are configured such that the air is introduced over a large area along the bases of said vessels (2, 3, 4), **in that** the air is introduced into the container or into the mixture contained therein in the region of an area of at least 40% of the area of the base of a vessel (2, 3, 4) just above the base or from the base.

2. Device (1) according to claim 1, **characterized in that** said vessels (2, 3, 4) have openings (22, 23, 24) facing said outlet region (5) and a height between the bases of said vessels (2, 3, 4) and upper sides of said vessels (2, 3, 4) increases towards said openings (22, 23, 24), where said upper sides are preferably formed to be curved.

3. Device (1) according to claim 1 or 2, **characterized in that** said vessels (2, 3, 4) are arranged and configured in relation to one another such that water and said component producing foam, which deposit from the foam produced within said device (1), can flow back into at least one of said vessels (2, 3, 4) so that foam can be produced again with this water.

4. Device (1) according to one of the claims 1 to 3, **characterized in that** said devices for blowing air in comprise bubble plates (7), membranes (7), or films.

5. Device (1) according to claim 4, **characterized in that** said bubble plates (7), membranes (7), or films are configured such that no water or as little water as possible and component producing foam can flow back through said bubble plates (7), membranes (7), or films when no air is blown in.

6. Device (1) according to one of the claims 1 to 5, **characterized in that** said devices for blowing air in comprise a controllable ventilation unit which controls the amount of air introduced into said vessels (2, 3, 4), where a separate ventilation unit is preferably connected to each vessel (2, 3, 4).

7. Device (1) according to one of the claims 1 to 6, **characterized in that** said the device (1) comprises a water level adjustment system in said vessels (2, 3, 4).

8. Device (1) according to claim 7, **characterized in that** said water level adjustment system in said vessels (2, 3, 4) is preferably connected to an external water supply (16) and/or a water tank (9).

9. Device (1) according to claim 8, **characterized in that** said water tank comprises a water temperature control unit and/or a cold pack.

10. Device (1) according to one of the claims 7 to 9, **characterized in that** said device (1) comprises a component addition (10) producing foam which is connected to said water level adjustment system.

11. Device (1) according to one of the claims 7 to 10, **characterized in that** said device (1) comprises a disinfectant addition (11) which is connected to said water level adjustment system.

12. Device (1) according to one of the claims 1 to 11, **characterized in that** said vessels (2, 3, 4) are enclosed in a housing (29) which comprises a foam outlet opening (6) from said outlet region (5).

13. Device (1) according to claim 12, **characterized in that** a tube (25) is connected to said foam outlet opening (6), where a shower head (26) with a controllable foam outlet is preferably connected to said tube (25).

14. Device (1) according to one of the claims 1 to 3, **characterized in that** said device (1) comprises a battery (27) for operating said device (1).

## Revendications

1. Dispositif (1) destiné à produire de la mousse pour des applications de bien-être et/ou d'hygiène, comportant une cuve (2, 3, 4) destinée à être remplie d'un mélange d'eau et d'un composant moussant, dans lequel la cuve (2, 3, 4) comporte un dispositif de soufflage d'air dans le mélange de production de mousse, dans lequel le dispositif (1) comprend au moins deux cuves (2, 3, 4) agencées verticalement l'une au-dessus de l'autre de forme étagée pour le remplissage du mélange, dans lequel les cuves (2, 3, 4) comportent le dispositif de soufflage d'air dans le mélange de production de mousse, dans lequel les cuves (2, 3, 4) sont ouvertes sur une zone de sortie (5) de telle sorte que la mousse produite dans les cuves (2, 3, 4) est collectée dans la zone de sortie (5), **caractérisé en ce que** les dispositifs de soufflage d'air sont conçus de manière à ce que l'air soit introduit sur une grande surface dans le fond des cuves (2, 3, 4), moyennant quoi l'air est introduit dans la zone d'une surface d'au moins 40 % de la surface du fond d'une cuve (2, 3, 4) juste au-dessus du fond ou par le fond dans la cuve (2, 3, 4), et plus particulièrement dans le mélange qu'elle contient.

2. Dispositif (1) selon la revendication 1, **caractérisé en ce que** les cuves (2, 3, 4) présentent des ouvertures (22, 23, 24) tournées vers la zone de sortie (5) et **en ce que** la hauteur augmente entre le fond des cuves (2, 3, 4) et le haut des cuves (2, 3, 4) vers les ouvertures (22, 23, 24), dans lequel le haut des cuves est de préférence bombé.

3. Dispositif (1) selon la revendication 1 ou 2, **caractérisé en ce que** les cuves (2, 3, 4) sont conçues et agencées les unes par rapport aux autres de telle sorte que l'eau et les composants moussants qui se déposent à l'intérieur du dispositif (1) à partir de la mousse générée peuvent refluer dans au moins l'une de ces cuves (2, 3, 4), de sorte que de la mousse peut à nouveau être produite avec cette eau.

4. Dispositif (1) selon l'une des revendications 1 à 3, **caractérisé en ce que** les dispositifs de soufflage d'air comportent des plaques d'aération (7), des membranes (7) ou des films.

5. Dispositif (1) selon la revendication 4, **caractérisé en ce que** les plaques d'aération (7), les membranes (7) ou les films sont conçus de telle sorte que l'eau et les composants moussants ne refluent pas, ou aussi peu que possible, à travers les plaques d'aération (7), les membranes (7) ou les films quand de l'air n'est pas insufflé.

6. Dispositif (1) selon l'une des revendications 1 à 5, **caractérisé en ce que** les dispositifs de soufflage d'air comprennent une unité d'aération réglable qui régule la quantité d'air introduite dans les cuves (2, 3, 4), dans lequel une unité d'aération séparée est de préférence connectée à chaque cuve (2, 3, 4).

7. Dispositif (1) selon l'une des revendications 1 à 6, **caractérisé en ce que** le dispositif (1) comporte un système de régulation du niveau d'eau dans les cuves (2, 3, 4).

8. Dispositif (1) selon la revendication 7, **caractérisé en ce que** le système de régulation du niveau d'eau dans les cuves (2, 3, 4) est connecté à une prise d'eau externe (16) et/ou à un réservoir d'eau (9).

9. Dispositif (1) selon la revendication 8, **caractérisé en ce que** le réservoir d'eau (9) comporte une unité de régulation de température et/ou un accumulateur de froid.

10. Dispositif (1) selon l'une des revendications 7 à 9, **caractérisé en ce que** le dispositif (1) comprend une alimentation en composant moussant (10) connectée au système de régulation du niveau d'eau.

11. Dispositif (1) selon l'une des revendications 7 à 10, **caractérisé en ce que** le dispositif (1) comprend une alimentation de désinfectant (11) connectée au système de régulation du niveau d'eau.

12. Dispositif (1) selon l'une des revendications 1 à 11, **caractérisé en ce que** les cuves (2, 3, 4) sont enfermées dans un boîtier (28) qui présente une ouverture de sortie de mousse (6) dans la zone de sortie (5).

13. Dispositif (1) selon la revendication 12, **caractérisé en ce qu'**un tuyau (25) est connecté à l'ouverture de sortie de mousse (6), dans lequel une pomme de douche (26) à sortie de mousse réglable est de préférence connectée au tuyau (25) .

14. Dispositif (1) selon l'une des revendications 1 à 13, **caractérisé en ce que** le dispositif (1) comporte une batterie (27) pour faire fonctionner le dispositif (1).
